# FASCICULE DE BREVET EUROPEEN

(11) **EP 2 864 857 B1**
(45) Date de publication et mention de la délivrance du brevet: **13.04.2022**
(21) Numéro de dépôt: 13730278.2
(22) Date de dépôt: 21.06.2013
(51) Int. Cl.: G06F 3/033, G06F 3/0354

(54) **STYLET DE SAISIE DE DONNÉES**
INFORMATIONSEINGABESTIFT
DATA INPUT STYLUS

(30) Priorité: 22.06.2012 FR 1255952
(43) Date de publication de la demande: 29.04.2015
(73) Titulaire: Banks and Acquirers International Holding, 75015 Paris (FR)
(72) Inventeur: ACHARI, Karim, F-91230 Montgeron (FR); HUTEAUX, Fabien, F-92100 Boulogne-Billancourt (FR)
(74) Mandataire: Vidon Brevets & Stratégie
(86) Numéro de dépôt international: PCT/EP2013/063066
(87) Numéro de publication internationale: WO 2013/190124

(56) Documents cités:
- DE-U1-202011 104 019
- US-A- 5 414 227
- US-A1- 2012 146 957

## Description

### 1 DOMAINE DE L'INVENTION

La technique décrite se rapporte au domaine des dispositifs de saisie sur écrans et dalles tactiles. Plus particulièrement, la présente invention se rapporte au domaine des stylets pour écrans et dalles tactiles.

### 2 SOLUTIONS DE L'ART ANTÉRIEUR

On connaît de l'art antérieur des dispositifs de pointage, appelés stylets, destinés à être utilisés sur des tablettes. Il peut s'agir de tablettes dédiées, comme des tablettes de dessins. Dernièrement, ce type de tablette a connu des évolutions importantes. Ces évolutions sont principalement liées au fait que les terminaux de type téléphone portable (« smartphone ») ont connu des modifications importantes et notamment l'adjonction de dalles tactiles permettant une saisie directe sur l'écran du terminal.

En règle générale, une telle saisie est réalisée en utilisant un doigt. D'autres modes de saisies restent également possibles dont l'utilisation d'un stylet. Cependant, ce stylet est un élément passif dont la fonction est d'imiter le doigt pour permettre la sélection et/ou l'utilisation sur un écran de terminal de type téléphone, et dispose donc d'une pointe arrondie, relativement volumineuse (de l'ordre du centimètre cube).

Les stylets destinés aux tablettes graphiques mettent en œuvre d'autres technologies. En premier lieu la pointe de ce type de stylet est relativement fine. Ceci s'explique par le fait que ce type de stylet est destiné à reproduire des illustrations précises, comme par exemple des dessins, des graphiques ou encore de l'écriture. Ce type de travail est fin et nécessite donc un instrument offrant un haut niveau de précision. Des stylets sensibles à la pression ont été développés et commercialisés au fil des années. Ces stylets permettent une prise en compte de la pression exercée par l'utilisateur lors de l'utilisation sur une surface (que ce soit un écran tactile ou un autre type de support). Bien que ces stylets soient plus ergonomiques et plus précis que les simples stylets non sensibles à la pression, ils ne sont pas satisfaisants.

En effet, l'un des problèmes rencontrés avec les stylets est relatif à la mesure de pression lorsque le stylet est incliné. Les premiers stylets sensibles à la pression ne prenaient pas correctement en compte le fait que le stylet était incliné, de sorte que pour une même pression exercée, la valeur de la pression calculée était différente selon que le stylet était incliné ou pas. Un autre problème réside dans le coût de fabrication de tels stylets. En effet, comme on va le voir, ces stylets comprennent de nombreux éléments qui sont complexes à assembler.

Des dispositifs ont été conçus pour pallier au moins certains des problèmes évoqués préalablement.

On connaît de la demande de brevet n°EP0727756 un stylet qui possède un dispositif sensible à la pression permettant de détecter une force de pression même lorsque le stylet est en position oblique. Le détecteur de pression utilise les modifications d'inductance générées par le déplacement relatif entre un corps magnétique mobile et un corps magnétique fixe autour duquel est enroulée une bobine, laquelle est disposée à une distance prédéterminée du corps magnétique mobile. L'extrémité du dispositif, située au bout du stylet, possède une portion de contact recevant la pression exercée sur le stylet. Le dispositif comprend également un élément dans un matériau élastique situé entre les corps magnétiques fixe et mobile; un premier dispositif de support maintenant la position du corps magnétique fixé malgré une pression de dépression; et un second dispositif de support maintenant l'élément de dépression dans une condition dans laquelle la plaque arrière du corps magnétique mobile et la plaque avant du corps magnétique fixe sont placés parallèles l'une avec l'autre en recevant la pression de dépression.

En d'autres termes, dans ce dispositif de l'art antérieur, deux corps magnétiques sont disposés à l'intérieur du stylet. Lorsqu'une pression est exercée sur le stylet, le corps magnétique mobile est rapproché du corps magnétique fixe. Le champ magnétique est donc modifié, ce qui génère une modification de l'inductance au niveau de la surface de la tablette ou de l'écran sur lequel le stylet est utilisé. Comme indiqué en figure 3 de ce brevet EP0727756, la surface de la tablette comprend un treillis permettant de mesurer l'inductance. US2012146957 A1, DE202011104019U U1 et US5414227 A divulguent des stylets de saisie de données comportant des pointes hémisphériques.

Ce type de stylet présente néanmoins un problème. D'une part il est fortement lié à la technologie employée par la tablette (à savoir une modification de l'inductance induite par la modification du champ magnétique à l'intérieur du stylet) et d'autre part il est complexe et coûteux à fabriquer.

### 3 RÉSUMÉ DE L'INVENTION

L'invention concerne un stylet de saisie de données sur une dalle de saisie, ledit stylet comprenant un corps comprenant un logement qui comprend :
un élément de référence, comprenant deux portions distinctes :
une première portion prenant place au sein dudit logement ;
une deuxième portion, comprenant une pointe dont l'extrémité est au moins hémisphérique ;
un amortisseur, non conducteur, non déformable, formant une gangue autour d'au moins une partie du dit élément de référence, comprenant une paroi externe, dite paroi externe dudit amortisseur, ledit amortisseur comprend un manchon cylindrique, comprenant une première extrémité hémisphérique, le diamètre intérieur du manchon cylindrique étant sensiblement égal au diamètre de l'extrémité au moins hémisphérique de l'élément de référence,

Selon l'invention, un espace laissé libre entre ladite première extrémité hémisphérique et l'extrémité au moins hémisphérique de l'élément de référence est comblé avec une matière déformable chargée,
ledit amortisseur comprend en outre une deuxième extrémité comprenant une couronne de retenue dudit amortisseur dans ledit logement, et
ledit amortisseur est mobile en translation en fonction de la pression exercée sur le stylet..

Ainsi le stylet permet de réaliser une mesure de la pression exercée sur la dalle de manière uniforme, quelle que soit l'inclinaison du stylet. Ceci est permis par l'utilisation d'une pointe de forme au moins hémisphérique, assurant que la distance entre la dalle et l'élément de référence est constante en fonction de l'inclinaison d'une part et en appliquant une méthode de mesure de pression basée sur cette distance d'autre part.

### 4 LISTE DES FIGURES

D'autres caractéristiques et avantages de l'invention apparaîtront plus clairement à la lecture de la description suivante d'un exemple de réalisation préférentiel, donné à titre de simple exemple illustratif et non limitatif, et des dessins annexés, parmi lesquels :
- la figure 1 présente un premier exemple de réalisation d'un stylet ;
- la figure 2 présente un deuxième exemple de réalisation d'un stylet ;
- la figure 3 présente un troisième exemple de réalisation d'un stylet ;
- la figure 4 présente un quatrième exemple de réalisation d'un stylet ;
- les figures 5A et 5B illustrent respectivement un exemple de système mettant en œuvre le procédé d'authentification électronique d'une signature manuscrite et les principales étapes de ce procédé d'authentification, selon un exemple de réalisation ;

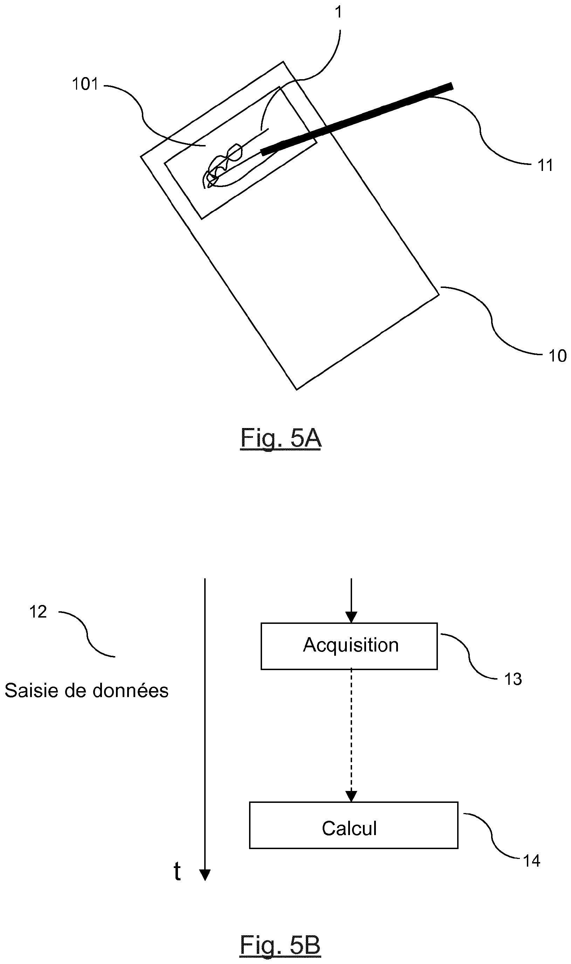

- la figure 5 illustre schématiquement un dispositif de mesure de la pression.

### 5 DESCRIPTION DÉTAILLÉE DE L'INVENTION

### 5.1 Rappel du principe de l'invention

L'objet de la présente divulgation est de proposer une technique qui permette de mesurer la pression exercée par l'utilisateur à l'aide d'un stylet de manière plus simple et plus efficace que les techniques antérieurement proposées. Plus particulièrement, la technique proposée se base sur un calcul d'une distance (d) entre un composant interne du stylet et la dalle (tactile ou non) sur laquelle le stylet est utilisé.

Les écrans tactiles capacitifs de dernières générations, permettent une mesure précise de la surface de contact entre la dalle de l'écran et tout autre objet auquel l'écran tactile est sensible (un doigt, une main, une pointe de stylet faite d'un matériau conducteur...).

En utilisant un stylet dont la pointe est faite d'un matériau déformable non conducteur dont la résistance mécanique donc la déformation est connue, ou bien d'un coffrage rigide mobile, relié au manche par un moyen de rappel, entourant une pointe métallique ou faite d'un diélectrique, on peut déduire de la distance mesurée par l'écran tactile entre la dalle et la pointe métallique, la pression appliquée par l'utilisateur tout au long de sa saisie.

L'élément interne du stylet, non neutre, détectée par l'écran tactile, peut soit être faite d'un métal conducteur dans le cas d'un stylo actif (le stylo constitue le capteur ou l'émetteur), ou bien faite simplement d'un diélectrique dans le cas d'un stylo passif (le stylet s'intercale volontairement comme perturbateur entre l'émetteur et le récepteur, tous 2 contenus dans la dalle tactile). Dans la suite, cet élément interne, qui sert de base à la mesure de la distance, est qualifié d'élément de référence. Il est soit conducteur soit passif, en fonction de la technologie de stylet utilisée.

Les variations de pression au court de la saisie sont ainsi un paramètre biométrique supplémentaire, pour permettre diverses fonctions comme l'authentification ou non d'une signature et donc de la personne en train de signer.

### 5.2 Description d'exemples de réalisation.

Comme décrit préalablement, afin d'éviter les problèmes liés aux dispositifs de l'art antérieur, et notamment à la complexité de fabrication de dispositifs tels que ceux décrits dans le document EP0727756, les inventeurs ont eu l'idée d'une part de réaliser un calcul de la pression exercée sur la base d'une distance (d) qui sépare un élément de référence (incorporé au stylet) de la dalle sur laquelle le stylet est utilisé et d'autre part d'assurer que cette pression (calculée à partir de la distance) sera la même quelle que soit la position du stylet sur la dalle. Plus particulièrement, la technique décrite permet d'assurer que la pression sera mesurée de la même manière quel que soit l'angle d'inclinaison du stylet.

Ce résultat est rendu possible en assurant que l'inclinaison du stylet est indépendante de la distance entre l'élément de référence du stylet et la dalle. Jusqu'à présent, il n'était pas possible d'assurer cette indépendance. La technique décrite offre ce résultat en proposant la combinaison de deux caractéristiques distinctes permettent d'obtenir le résultat escompté.

La première caractéristique est l'utilisation d'un élément de référence dont une extrémité est au moins hémisphérique et au plus sensiblement sphérique, ledit élément de référence étant fixe et constituant un point de référence. En d'autres termes, l'extrémité de l'élément de référence a une forme comprise entre une demi-sphère et une sphère. L'élément de référence n'est pas lui-même en contact avec la surface de la dalle. Il est intégré au corps du stylet. L'élément de référence comprend une extrémité ayant une forme prédéterminée. Cette forme est hémisphérique dans un exemple de réalisation. Cela signifie que l'extrémité de l'élément de référence est hémisphérique. Le reste de l'élément de référence est conformé pour être intégré dans le stylet. Néanmoins, en fonction des exemples de réalisation, le reste de l'élément de référence peut avoir une forme spécifique ou une forme comprise entre la demi-sphère et la sphère, qui n'est pas uniquement liée au positionnement de l'élément de référence dans le corps du stylet, comme cela est précisé par la suite. La finalité de cette forme (hémisphérique ou sensiblement sphérique) réside dans le fait que quelle que soit l'inclinaison du stylet, la distance entre la surface de la dalle et l'élément de référence (plus précisément un point de référence de l'élément de référence) ne varie pas.

La deuxième caractéristique est l'utilisation d'un amortisseur qui forme une gangue autour de l'élément de référence. La paroi externe de l'amortisseur constitue le point de contact entre le stylet et la surface de la dalle. L'amortisseur fait office de variateur de distance entre l'élément de référence (et surtout le point de référence de l'élément de référence) et la surface de la dalle. Cette fonction d'amorti permet de faire varier la pression exercée sur le stylet. En fonction du exemple de réalisation, l'amortisseur est soit mécanique (dans ce cas il est mobile entre deux positions) soit, dans un exemple de réalisation non revendiqué, déformable (dans ce cas il peut être écrasé).

On présente ci-après trois exemples de réalisation du stylet objet de la divulgation. Chacun de ces exemples de réalisation correspond à une mise en œuvre particulière des principes décrits précédemment.

### 5.2.1 Élément de référence de forme hémisphérique

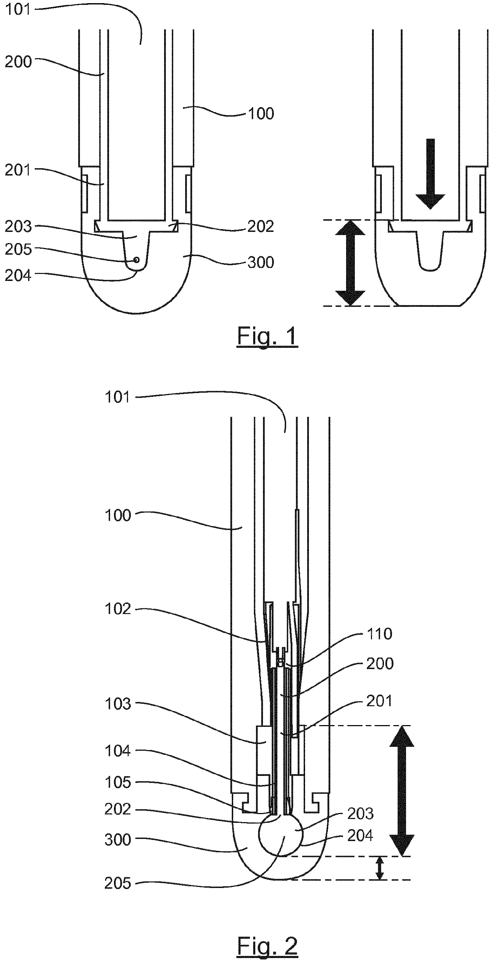

Cet exemple de réalisation est présenté en relation avec la figure 1. Dans cet exemple de réalisation, le stylet comprend un corps 100 creux comprenant un logement 101. De manière usuelle, ce corps est de forme globalement tubulaire. Dans ce logement 101, un élément de référence 200 est inséré. Cet élément de référence 200 comprend deux portions distinctes : une première portion 201 prend place au sein du logement 101. Cette première portion est conformée pour cette fonction. Elle peut être fixée par collage, emboitement ou toute méthode convenable...

La deuxième portion 202 comprend une pointe 203 ayant une extrémité hémisphérique 204. Le point central 205 de l'extrémité hémisphérique est le point de référence servant à évaluer la distance avec la dalle. Le point de référence est défini de sorte qu'une quasi absence de pression exercée sur le stylet soit interprété comme une quasi absence de pression (et donc un trait d'une épaisseur normale). L'interprétation de la pression exercée est réalisée par l'intermédiaire d'un composant qui peut être mis en œuvre soit dans la tablette elle-même soit dans un terminal auquel la tablette est connectée.

La deuxième portion 202 est recouverte d'une enveloppe 300, non conductrice. Cette enveloppe 300, qui dans un exemple de réalisation non revendiqué est en matériau souple et déformable, joue le rôle d'amortisseur. Comme cette enveloppe est déformable, en fonction de la pression exercée par l'utilisateur sur le stylet, la distance entre le point de référence et la dalle varie, ce qui a pour effet de modifier la charge sur la dalle et donc de permettre une déduction de pression par exemple.

### 5.2.2 Élément de référence de forme sensiblement sphérique

Dans cet exemple de réalisation, présenté en relation avec la figure 2, le stylet comprend un corps 100 creux comprenant un logement 101. De manière usuelle, ce corps est de forme globalement tubulaire. Dans ce logement 101, un élément de référence 200 est inséré. Dans le logement 101, outre l'élément de référence 200, on a également : une gaine de blindage 102, un bouclier 103, un bouclier isolant 104, un anneau isolant 105.

L'élément de référence 200 comprend deux portions distinctes : une première portion 201 prend place au sein du logement 101, à l'intérieur des isolants (bouclier isolant 104, anneau isolant 105) et s'étend pour entrer en contact avec un éventuel élément de contact électrique 110 du stylet (ceci est vrai quand il s'agit d'un stylet actif, cet élément de contact électrique 110 pouvant être absent en cas de stylet passif). Cette première portion 201 est conformée pour ces fonctions de maintien, d'assemblage et éventuellement de contact à l'intérieur du stylet.

La deuxième portion 202 comprend une pointe 203 ayant une extrémité sensiblement sphérique 204. Le point central 205 de l'extrémité hémisphérique est le point de référence servant à évaluer la distance avec la dalle. Le point de référence est défini de sorte qu'une quasi absence de pression exercée sur le stylet soit interprété comme une quasi absence de pression (et donc un trait d'une épaisseur normale). L'interprétation de la pression exercée est réalisée par l'intermédiaire d'un composant qui peut être mis en œuvre soit dans la tablette elle-même soit dans un terminal auquel la tablette est connectée.

La deuxième portion 202 est recouverte d'une enveloppe 300, non conductrice. Cette enveloppe 300, qui dans un exemple de réalisation non revendiqué est en matériau souple et déformable, joue le rôle d'amortisseur. Comme cette enveloppe est déformable, en fonction de la pression exercée par l'utilisateur sur le stylet, la distance entre le point de référence 205 et la surface de la dalle varie, ce qui a pour effet de modifier la charge sur la dalle et donc de permettre une déduction de pression par exemple.

### 5.2.3 Élément de référence de forme sensiblement sphérique, amortisseur mécanique

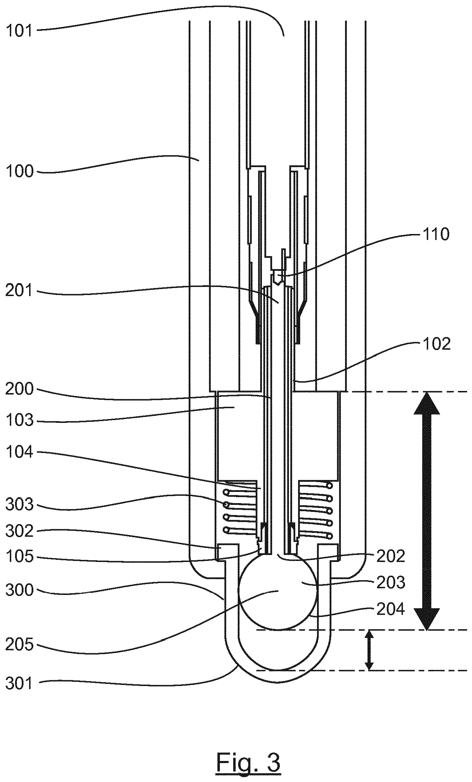

Dans cet exemple de réalisation, ne se rapportant pas à l'invention telle que revendiquée et présenté en relation avec la figure 3, le stylet comprend un corps 100 creux comprenant un logement 101. De manière usuelle, ce corps est de forme globalement tubulaire. Dans ce logement 101, un élément de référence 200 est inséré. Dans le logement 101, outre l'élément de référence 200, on a également : une gaine de blindage 102, un bouclier 103, un bouclier isolant 104, un anneau isolant 105.

L'élément de référence 200 comprend deux portions distinctes : une première portion 201 prend place au sein du logement 101, à l'intérieur des isolants (bouclier isolant 104, anneau isolant 105) et s'étend pour entrer en contact avec un éventuel élément de contact électrique 110 du stylet (ceci est vrai quand il s'agit d'un stylet actif, cet élément de contact électrique 110 pouvant être absent en cas de stylet passif). Cette première portion est conformée pour ces fonctions de maintien, d'assemblage et éventuellement de contact à l'intérieur du stylet.

La deuxième portion 202 comprend une pointe 203 ayant une extrémité sensiblement sphérique 204. Le point central 205 de l'extrémité sensiblement sphérique est le point de référence servant à évaluer la distance avec la dalle. Le point de référence est défini de sorte qu'une quasi absence de pression exercée sur le stylet soit interprété comme une quasi absence de pression (et donc un trait d'une épaisseur normale). L'interprétation de la pression exercée est réalisée par l'intermédiaire d'un composant qui peut être mis en œuvre soit dans la tablette elle-même soit dans un terminal auquel la tablette est connectée.

La deuxième portion 202 est recouverte d'une enveloppe 300, non conductrice. Cette enveloppe 300 en matériau solide et non déformable joue le rôle d'amortisseur. Cette enveloppe 300 a globalement la forme d'un manchon cylindrique, comprenant une première extrémité hémisphérique 301. Le diamètre intérieur du manchon cylindrique est sensiblement égal au diamètre de l'extrémité sensiblement sphérique 204 de l'élément de référence 200. L'extrémité hémisphérique 301 est également conformée de sorte qu'elle puisse recevoir l'extrémité sensiblement sphérique 204 de la pointe 203 de la deuxième portion 202 de l'élément de référence 200. La deuxième extrémité de l'enveloppe 300 comprend une couronne 302. Cette couronne 302 permet de bloquer l'enveloppe 300 dans le logement 101. L'enveloppe 300 est mobile en translation en fonction de la pression exercée sur le stylet. Le retour en position initiale de l'enveloppe est assuré par l'utilisation d'un moyen de rappel 303 (comme un ressort) inséré dans le logement 101 et reposant sur la couronne 302.

En fonction de la pression exercée par l'utilisateur sur le stylet, la distance entre le point central de référence et la dalle varie, ce qui a pour effet de modifier la charge sur la dalle et donc de permettre une déduction de pression.

### 5.2.4 Élément de référence de forme hémisphérique, amortisseur mécanique et non déformable

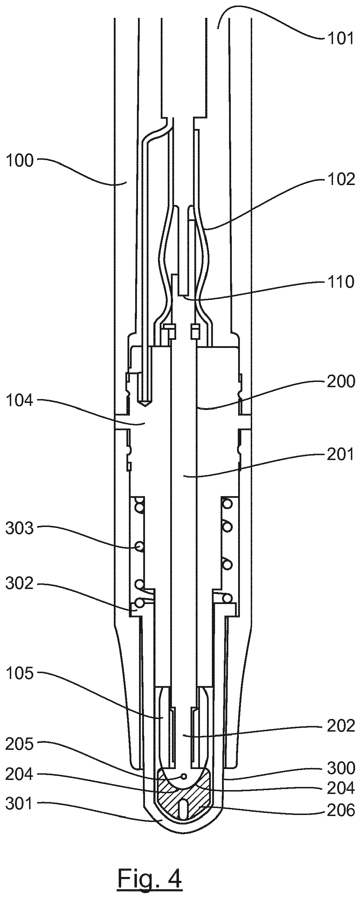

Dans cet exemple de réalisation, présenté en relation avec la figure 4, le stylet comprend un corps 100 creux comprenant un logement 101. De manière usuelle, ce corps est de forme globalement tubulaire. Dans ce logement 101, un élément de référence 200 est inséré. Dans le logement 101, outre l'élément de référence 200, on a également : une gaine de blindage 102, un bouclier isolant 104, un anneau isolant 105.

L'élément de référence 200 comprend deux portions distinctes : une première portion 201 prend place au sein du logement 101, à l'intérieur des isolants (bouclier isolant 104, anneau isolant 105) et s'étend pour entrer en contact avec un éventuel élément de contact électrique 110 du stylet (ceci est vrai quand il s'agit d'un stylet actif, cet élément de contact électrique 110 pouvant être absent en cas de stylet passif). Cette première portion est conformée pour ces fonctions de maintien, d'assemblage et éventuellement de contact à l'intérieur du stylet.

La deuxième portion 202 comprend une pointe 203 ayant une extrémité hémisphérique 204. Le point central 205 de l'extrémité hémisphérique est le point de référence servant à évaluer la distance avec la dalle. Le point de référence est défini de sorte qu'une quasi absence de pression exercée sur le stylet soit interprété comme une quasi absence de pression (et donc un trait d'une épaisseur normale). L'interprétation de la pression exercée est réalisée par l'intermédiaire d'un composant qui peut être mis en œuvre soit dans la tablette elle-même soit dans un terminal auquel la tablette est connectée.

La deuxième portion 202 est recouverte d'une enveloppe 300, non conductrice. Cette enveloppe 300 en matériau solide et non déformable joue le rôle d'amortisseur. Cette enveloppe 300 a globalement la forme d'un manchon cylindrique, comprenant une première extrémité hémisphérique 301. Le diamètre intérieur du manchon cylindrique est sensiblement égal au diamètre de l'extrémité hémisphérique 204 de l'élément de référence 200. L'extrémité hémisphérique 301 est également conformée de sorte qu'elle puisse recevoir l'extrémité hémisphérique 204 de la pointe 203 de la deuxième portion 202 de l'élément de référence 200. La deuxième extrémité de l'enveloppe 300 comprend une couronne 302. Cette couronne 302 permet de bloquer l'enveloppe 300 dans le logement 101. L'enveloppe 300 est mobile en translation en fonction de la pression exercée sur le stylet. Le retour en position initiale de l'enveloppe est assuré par l'utilisation d'un moyen de rappel 303 (comme un ressort) inséré dans le logement 101 et reposant sur la couronne 302.

Outre la différence de forme de l'élément de référence 200, cet exemple de réalisation se différencie également de l'exemple de réalisation précédemment présenté par le fait que l'espace laissé libre 206 entre l'élément de référence et comprenant une première extrémité hémisphérique 301 de l'enveloppe 300 est comblé avec une matière déformable chargée. Dans une exemple de réalisation spécifique de l'invention, cette matière est du silicone chargé. Cette matière déformable chargée permet de modifier le comportement du stylet. Plus particulièrement, l'air étant un mauvais diélectrique, il est avantageux de remplacer l'air du troisième exemple de réalisation par une matière qui ait un meilleur effet conducteur. Ceci permet de calibrer et de régler le stylet de manière plus simple et améliore la sensibilité à la pression. Plus particulièrement, on améliore la perception de la distance entre le point de référence et la dalle.

Dans d'autres termes, dans ce exemple de réalisation, on utilise une matière plus ou moins conductrice et compressible, pour combler le vide d'air entre l'enveloppe et l'extrémité. Il est possible pour ce faire d'utiliser un gel très visqueux conducteur en lieu et place de la matière siliconée.

De manière théorique, si l'on considère que l'on travaille avec un condensateur plan, on a la formule suivante Capacité = (permittivité x Surface)/distance. En remplaçant l'air par un matériel conducteur, on augmente la permittivité, donc la capacité (qui est la grandeur mesurée par le système) augmente fortement aussi. On améliore dans ce cas la sensibilité du système.

Comme dans les exemples de réalisation précédents, en fonction de la pression exercée par l'utilisateur sur le stylet, la distance entre le point central de référence et la dalle varie, ce qui a pour effet de modifier la charge sur la dalle et donc de permettre une déduction de pression.

### 5.3 Méthode d'obtention de la distance du capteur par rapport à la dalle

Comme préalablement exposé, la technique décrite repose sur l'obtention de la distance du point de référence intégré dans le stylet par rapport à la dalle (tactile ou non) sur laquelle le stylet est utilisé.

La technique réponse sur l'acquisition, par rapport à la surface de la dalle elle-même, d'un élément représentatif de la distance d'un stylet pendant la saisie réalisée par l'utilisateur. Pour plus de simplicité, cet élément est par la suite désigné par la lettre « d », pour « distance ». La donnée de distance peut être acquise par la dalle elle-même, la technique décrite ne nécessite alors pas de mise en œuvre particulière au niveau du stylet (le stylet est passif), peu ou pas de réglages ou de maintenance particulière. On présente, en relation avec les figures 5A et 5B, un exemple de système de mise en œuvre de la technique décrite et les principales étapes du procédé de mesure de distance mis en œuvre dans un tel système, selon un exemple de réalisation ne se rapportant pas à l'invention telle que revendiquée.

Comme illustré en figure 5A, on considère un module de mesure 10 présentant une dalle 101 comprenant une zone tactile capacitive sur laquelle l'utilisateur saisit des données 1 (les données saisies peuvent être une signature, une illustration, une phrase, etc.), en vue d'une réalisation d'une certaine fonction dans le système. La fonction à réaliser peut par exemple être une authentification, un dessin, l'écriture d'une phrase, une saisie à l'aide d'un clavier virtuel, etc.). Le module de mesure 10 est par exemple est intégré dans un terminal de paiement, un téléphone mobile, un PDA, une tablette tactile, un smartphone, etc. Les données 1 sont saisies via un stylet 11, adapté à une saisie sur la zone tactile capacitive. Ce stylet est apte à permettre une obtention de distance par rapport à la dalle. Il s'agit d'un stylet comme ceux décrits préalablement. La figure 5B présente les principales étapes du procédé de mesure d'une signature manuscrite, mis en œuvre dans un système tel que décrit ci-dessus en relation avec la figure 5A.

Une étape 13 d'acquisition d'une donnée représentative de distance d du stylet est mise en œuvre, à au moins un instant de l'étape 12 de saisie des données, et avantageusement tout au cours de la saisie des données. Par exemple, on peut acquérir trois cent échantillons par seconde au cours de la saisie de la signature, pour obtenir des bonnes performances en termes de fiabilité de mesure. Par ailleurs, selon le type de zone tactile capacitive, on peut acquérir des éléments de distance jusqu'à deux centimètres au-dessus de la dalle.

Selon une variante de ce exemple de réalisation, l'étape d'acquisition permet d'acquérir une pluralité d'autres données relatives à la position du stylet par rapport à la zone tactile capacitive de la dalle, comme par les coordonnées (x,y) du stylet sur la dalle, à plusieurs moments de la saisie de données. Il est à noter que les coordonnées x, y et d sont acquises par la zone tactile capacitive de la dalle elle-même, sans nécessiter de mise en œuvre particulière au niveau du stylet. Par ailleurs, cette mise en œuvre par la dalle elle-même ne nécessite pas non plus de réglages, ou peu de réglages, ni de maintenance particulière, contrairement à l'utilisation de capteurs optiques sur le stylet par exemple. Après l'étape d'acquisition 13, ou au fur et à mesure de l'acquisition des données de distance d, une étape de calcul 14 de pression est mise en œuvre, délivrant un résultat de calcul de pression compte tenu de la manière dont la saisie est effectuée par l'utilisateur.

Selon une première variante, l'étape de calcul 14 peut être mise en œuvre après la saisie effectuée par l'utilisateur, et donc après l'acquisition de toutes les données de distance. Cette variante est par exemple mise en œuvre lorsque des données de référence servant à une authentification seraient disponibles sur un serveur distant, avec lequel il faudrait initier une communication pour pouvoir utiliser ces données de référence.

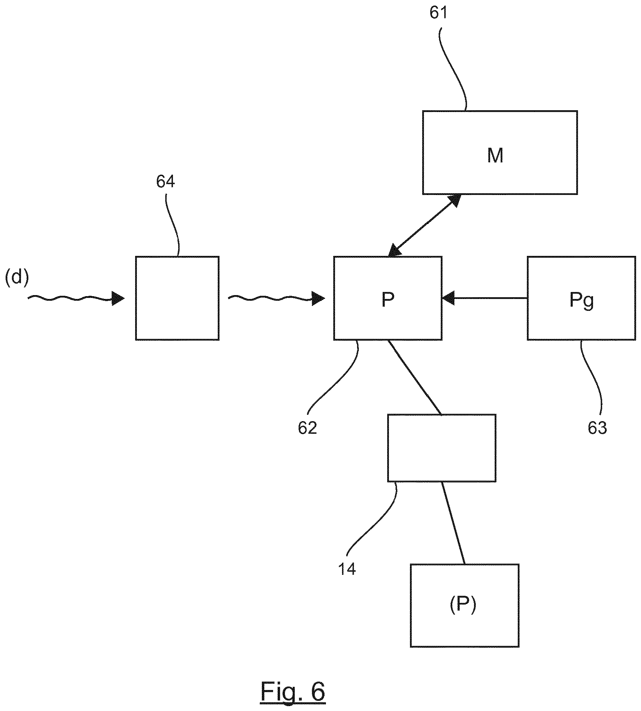

La figure 6 illustre une structure simplifiée d'un dispositif de mesure de pression selon un exemple de réalisation ne se rapportant pas à l'invention telle que revendiquée. Par exemple, le dispositif de mesure de pression comprend une mémoire 61 constituée d'une mémoire tampon, une unité de traitement 62, équipée par exemple d'un microprocesseur, et pilotée par le programme d'ordinateur 63, mettant en œuvre un procédé de mesure de la distance du capteur par rapport à la dalle.

À l'initialisation, les instructions de code du programme d'ordinateur 63 sont par exemple chargées dans une mémoire avant d'être exécutées par le processeur de l'unité de traitement 62. L'unité de traitement 62 reçoit en entrée au moins une donnée représentative d'une variation de distance. Le microprocesseur de l'unité de traitement 62 met en œuvre les étapes du procédé de mesure, selon les instructions du programme d'ordinateur 63, pour évaluer la pression exercée.

Pour cela, le serveur de contenus multimédias comprend, outre la mémoire tampon 61,
- des moyens d'acquisition 64 d'une donnée représentative de distance d du stylet par rapport à la surface de la dalle,
- des moyens de de calcul 14 de pression.

Ces moyens sont pilotés par le microprocesseur de l'unité de traitement 62 pour fournir une donnée représentative de la pression exercée.

De manière prédéterminée, la pression peut être calculée sur la base de la distance seule. Dans ce cas, à une distance donnée correspond une pression déterminée. Une table de correspondance est utilisée à cette fin. Selon un autre exemple de réalisation, la pression mesurée à un instant *t* est fonction de la distance d à cet instant *t* et de la pression déterminée à l'instant *t-1*.

## Revendications

1. Stylet de saisie de données sur une dalle de saisie, ledit stylet comprenant un corps (100) comprenant un logement (101) , ledit stylet comprenant
- un élément de référence (200), comprenant deux portions distinctes :
- une première portion (201) prenant place au sein dudit logement (101) ;
- une deuxième portion (202), comprenant une pointe (203) dont l'extrémité (204) est au moins hémisphérique ;
- un amortisseur (300), non conducteur, non déformable, formant une gangue autour d'au moins une partie du dit élément de référence (200), comprenant une paroi externe, dite paroi externe dudit amortisseur (300), ledit amortisseur (300) comprend un manchon cylindrique, comprenant une première extrémité hémisphérique (301), le diamètre intérieur du manchon cylindrique étant sensiblement égal au diamètre de l'extrémité au moins hémisphérique (204) de l'élément de référence (200), et le stylet comprenant en outre un (206) laissé libre entre ladite première
extrémité hémisphérique (301) et l'extrémité au moins hémisphérique (204) de l'élément de référence (200) , ledit espace étant comblé avec une matière déformable chargée, ledit amortisseur (300) comprenant en outre une deuxième extrémité comprenant une couronne (302) de retenue dudit amortisseur (300) dans ledit logement (101), ledit amortisseur (300) étant mobile en translation en fonction de la pression exercée sur le stylet.

## Patentansprüche

1. Stift zum Eingeben von Daten in eine Eingabeplatte, wobei der Stift einen Körper (100) aufweist, der ein Gehäuse (101) aufweist, wobei der Stift aufweist:
- ein Referenzelement (200), das zwei unterschiedliche Abschnitte aufweist:
- einen ersten Abschnitt (201), der innerhalb des Gehäuses (101) angeordnet ist,
- einen zweiten Abschnitt (202), der eine Spitze (203) aufweist, deren Ende (204) mindestens halbkugelig ist,
- einen nicht leitenden, nicht verformbaren Dämpfer (300), der eine Hüllenschicht um mindestens einen Teil des Referenzelements (200) bildet, umfassend eine Außenwand, die Außenwand des Dämpfers (300) genannt wird, wobei der Dämpfer (300) eine zylindrische Hülse aufweist, die ein erstes halbkugeliges Ende (301) aufweist, wobei der Innendurchmesser der zylindrischen Hülse im Wesentlichen gleich dem Durchmesser des mindestens halbkugeligen Endes (204) des Referenzelements (200) ist,
und wobei der Stift ferner einen frei gelassenen Raum (206) zwischen dem ersten halbkugeligen Ende (301) und dem mindestens halbkugeligen Ende (204) des Referenzelements (200) aufweist, wobei der Raum mit einem verformbaren Füllmaterial gefüllt ist, wobei der Dämpfer (300) ferner ein zweites Ende aufweist, das einen Kranz (302) zum Halten des Dämpfers (300) in dem Gehäuse (101) aufweist, wobei der Dämpfer (300) in Abhängigkeit von dem Druck, der auf den Stift ausgeübt wird, translatorisch bewegbar ist.

## Claims

1. Stylus for entering data on to an entry pad, said stylus comprising a body (100) comprising a housing (101), said stylus comprising:
- a reference element (200) comprising two distinct portions:
- a first portion (201) seated within said housing (101);
- a second portion (202) comprising a tip (203), the end (204) of which is at least hemispherical;
- a non-flexible, non-conductive damper (300), forming a cladding around at least one part of said reference element (200), comprising an external wall, called an external wall of said damper (300), said damper (300) comprises a cylindrical sleeve comprising a first hemispherical end (301), the internal diameter of the cylindrical sleeve being substantially equal to the diameter of the at least hemispherical end (204) of the reference element (200), the stylus further comprising a space (206) left vacant between said first hemispherical end (301) and the at least hemispherical end (204) of the reference element (200), said space being filled with an electrically charged deformable material
said damper (300) further comprising a second end comprising a retaining ring (302) for retaining said damper (300) in said housing (101), said damper (300) is mobile in translation according to the pressure exerted on the stylus.
